# EUROPEAN PATENT APPLICATION

(11) **EP 1 624 029 A1**
(43) Date of publication of application: **08.02.2006**
(21) Application number: 04018578.7
(22) Date of filing: 05.08.2004
(51) Int. Cl.: C09B 55/00, G11B 7/24

(54) **New Pyridinium imine based dyes and their use in optical layers for optical data recording**

(71) Applicant: CLARIANT INTERNATIONAL LTD., 4132 Muttenz (CH)
(72) Inventor: Graciet, Jean-Christophe, 68128 Village-Neuf (FR)

(57) **Abstract**

The present invention relates to new pyridinium imine based dyes and their use in optical layers for optical data recording, preferably for optical data recording using a laser with a wavelength up to 450 nm. The new dyes are also usable in combination with azo metal complex as anionic counter-ion, particularly azo cobalt complex.
The invention further relates to a write only read many (WORM) type optical data recording medium capable of recording and reproducing information with radiation of blue laser, which employs a pyridinium imine based dye in the optical layer.

## Description

The present invention relates to new pyridinium imine based dyes and their use in optical layers for optical data recording, preferably for optical data recording using a laser with a wavelength up to 450 nm.
The invention further relates to a write only read many (WORM) type optical recording medium capable of recording and reproducing information with radiation of blue laser, which employs a pyridinium imine based dye in the optical layer.

Recently, organic dyes have attracted considerable attentions in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stabilities, durability for storage or non-toxicity.

For industrial application, these dyes have to be suitable for the spin coating process to prepare thin films, i.e. they have to be sufficiently soluble in the organic solvents generally applied in the spin coating process.

WORM (write once read many) type and erasable type optical recording media reproduce information by detecting variations in the reflectivity caused by physical deformation, by alterations of optical characteristics as well as by phase and magnetic properties of a recording layer before and after the recording.

Recordable compact discs (CD-R) are widely known as a WORM type optical recording medium. Recently, digital versatile discs (DVD) with increased information storage capabilities up to 4.7 GBytes have been commercialized.

The DVD-R technology adopts as a light source a red diode laser with a wavelength of 630-670 nm. Thereby the pit size and track interval can be reduced, increasing the information storage capacity by up to 6-8 times compared to CD-R's.

Blu-ray® discs (Blu-ray® disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. aluminium, gold or copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating or soaking. The preferred process in industry is spin coating to form an optical layer of about 70 nm to 250 nm thickness. For the application in the spin coating process, the material of the optical layer has to be highly soluble in organic solvents.

**FR2841779** (L'Oréal) and **EP1378544** (L'Oréal) disclose the use of pyridinium dyes as new dyes for hair dyeing compositions

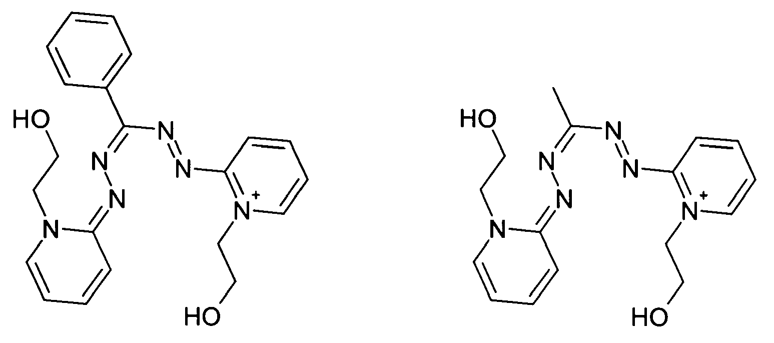

**WO03/060015** (Ciba) discloses the use of pyridinium dyes for dying organic material.

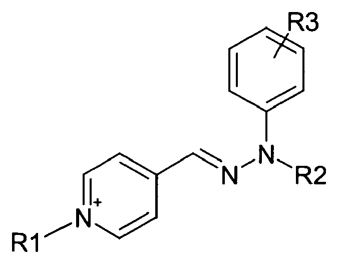

Sarel et al (J.Med.Chem 1999, 42, 242-248) describe the use of such pyridinium dyes as inhibitors of ribonucleoside diphosphate reductase.

Surprisingly it has been found, that the new pyridinium imine based dyes as described below are useful as dye compounds in optical layers for optical data recording media.

The present invention therefore relates to new pyridinium imine based dyes and to their use in an optical layer comprising pyridinium imine based dyes as described below and to the use of said optical layers for optical data recording media.
More particularly, the invention relates to a write only read many (WORM) type optical data recording medium capable of recording and reproducing information with radiation of blue laser of preferably 405 nm, which employs a pyridinium imine based dye in the optical layer.

The present invention is directed to a dye compound of formula (I) 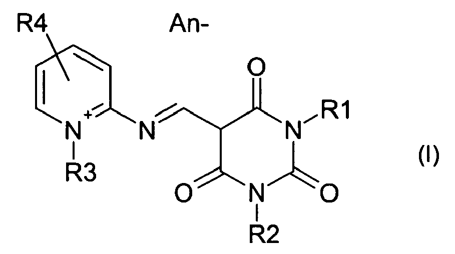
wherein
- R₁ and R₂: independently of one another, represent hydrogen, C₁₋₈ alkyl wherein the alkyl rest can be unsubstituted or substituted by C₁₋₄ alkyl, hydroxy (-OH), by C₆₋₁₂ aryl or by -NR₅R₆ in which R₅ and R₆ are independently selected from hydrogen, C₁₋₈ alkyl or C₆₋₁₂ aryl; CX₃ where X can be chlorine, fluorine, bromine;
- R₃: represents C₁₋₈ alkyl unsubstituted or substituted by C₁₋₄ alkyl, hydroxy (-OH) or -NR₇R₈ in which R₇ and R₈ are independently selected from hydrogen, C₁₋₈ alkyl or C₆₋₁₂ aryl;
- R₄: represents hydrogen, cyano (CN), halogen, nitro (NO₂), hydroxy (OH) or C₁₋₁₂ alkyl;
- An⁻: represents an anion counter-part selected from inorganic anions such as iodine, fluorine, bromine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂;

An⁻ can also be an anionic azo metal complex based on cobalt metal.

In a preferred aspect, the present invention is directed to a dye compound of formula (I) wherein
- R₁ and R₂: independently of one another, represent hydrogen, C₁₋₈ alkyl wherein the alkyl rest can be unsubstituted or substituted by C₁₋₄ alkyl, by -NR₅R₆ in which R₅ and R₆ are independently selected from hydrogen, C₁₋₈ alkyl or C₆₋₁₂ aryl;
- R₃: represents C₁₋₈ alkyl;
- R₄: represents hydrogen, nitro (NO₂), or C₁₋₆ alkyl;
- An⁻: represents an anion counter-part selected from inorganic anions such as iodine, perchlorate, hexafluoroantimonate, hexafluorophosphate, tetrafluoroborate, or organic anions such as dicyanoamide (N(CN)₂) or trifluoromethanesulfonimide (N(SO₂CF₃)₂;

An⁻ can also be an anionic azo metal complex based on cobalt metal.

In a more preferred aspect, the present invention is directed to a dye compound of formula (I) wherein
- R₁ and R₂: independently of one another, represent hydrogen, C₁₋₄ alkyl;
- R₃: represents C₁₋₄ alkyl;
- R₄: represents hydrogen, nitro (NO₂);
- An⁻: represents an anion counter-part selected from inorganic anions such as iodine, hexafluoroantimonate, tetrafluoroborate, or organic anions such as dicyanoamide (N(CN)₂) or trifluoromethanesulfonimide (N(SO₂CF₃)₂;

An⁻ can also be an anionic azo metal complex based on cobalt metal.

In a most preferred embodiment, the present invention is directed to a dye compound of formula (I) wherein
- R₁ and R₂: represent hydrogen;
- R₃: represents methyl;
- R₄: represents hydrogen;
- An⁻: represents an anionic azo cobalt complex of the following formula

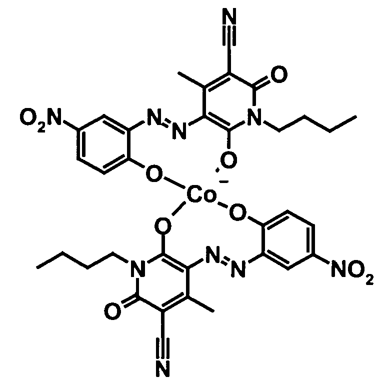

The present invention further relates to an optical layer comprising a dye compound of formula (I) as described above and to the use of said optical layers for optical data recording media. An optical layer according to the invention may also comprise a mixture of two or more, preferably of two dye compounds of formula (I) as defined above.
The pyridinium imine based dye compounds of formula (I) provide for particularily preferable properties when used in optical layers for optical data recording media according to the invention.

Further, the invention relates to a method for producing optical layers comprising the following steps
(a) providing a substrate
(b) dissolving a dye compound or a mixture of dye compounds of formula (I) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from C₁₋₈ alcohol , halogen substituted C₁₋₈ alcohols, C₁₋₈ ketone, C₁₋₈ ether, halogen substituted C₁₋₄ alkane, or amides.
Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.
Preferred amides are for example dimethylformamide or dimethylacetamide.

The optical layer (dye layer) obtained preferably has a thickness from 70 to 250 nm.

In a preferred aspect, the present invention provides for an optical layer suitable for high-density recording material, e.g. of the WORM disc format, in a laser wavelength range of from 350-450nm, preferably around 405 nm.
The dye compounds of formula (I) possess the required optical characteristics (such as high absortivity, high recording sensitivity as example), an excellent solubility in organic solvents, an excellent light stability and a decomposition temperature of 250-300°C.

### Preparation of pyridinium imine based type dyes according to the invention

The pyridinium imine based dye compounds of formula (I) are obtained by reacting the amino group of (A) with the corresponding barbituric acid derivative (B) and trialkylorthoformiate (C) in an acidic medium as solvent, such as acetic acid under reflux conditions. The resulting pyridine imine dye (D) is then alkylated using a slight excess of alkylating agent in an inert solvent, in the eventual presence of organic or inorganic base. Anion exchange is performed on the obtained compound (E) in a solvent under reflux condition with the corresponding counter-ion suitable for the exchange, providing the final dye (I). 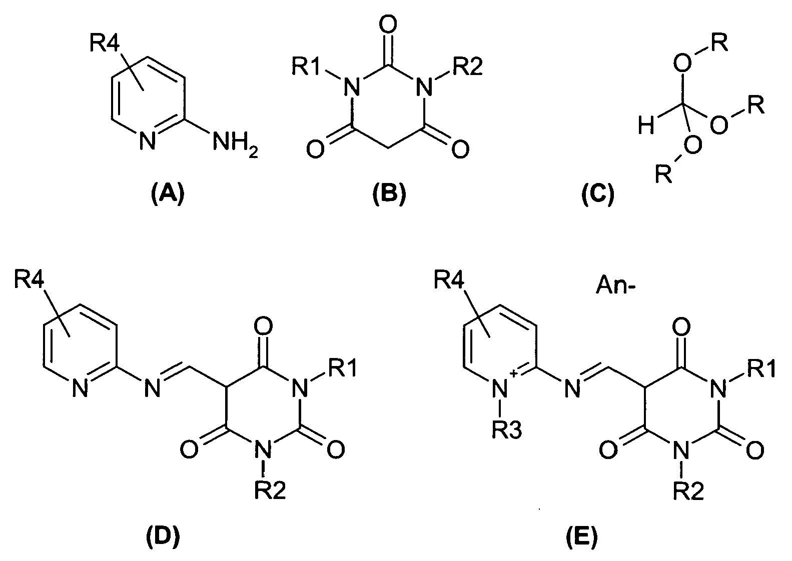
wherein R₁ to R₄ and An⁻ are defined as above. R in (C) being preferably methyl or ethyl moieties.

The process for the preparation of dyes of formula (I) can be described by the following steps:
(a) a reaction between **(A)**, **(B)** and **(C)** to form the imine intermediate **(D)**.
(b) an alkylation reaction of compound **(D)** using a slight excess of alkylating agent leading to the **(E)**.
(c) An anion exchange on compound **(E)** using a polar or unpolar solvent and the suitable counter-ion.

The condensation (step a)) between **(A)**, **(B)** and **(C)** to form the pyridine imine **(D)** is performed using acidic medium as solvent. The preferred acid is an organic acid such as acetic acid.

The preferred solvent for the step (b) is selected from the group consisting of cetones (acetone, methylethylcetone), halogenated solvents (dichloromethane, dichloroethane), dimethylformamide (DMF) or N-methylpyrolidone (NMP).
The preferred solvents used in the anion exchange reaction (step (c)) are selected from the group consisting of cetones (acetone, methylethylcetone), alcohols (methanol, ethanol), halogenated solvents (dichloromethane, dichloroethane), dimethylformamide (DMF) or N-methylpyrolidone (NMP).

The most preferred acid for step a) is the acetic acid. The preferred base is triethylamine.
The most preferred solvent for step b) is methylethylcetone or dichloromethane.
The most preferred solvents for step c) are methylethylcetone or ethanol.

### Preparation of high density optical data recording medium

The preparation of a high density optical data recording medium / a high density optical disc conventionally comprises the following steps:
(a) providing a first substrate
(b) dissolving the dye in an organic solvent to form a solution,
(c) coating the first solution on the first substrate;
(d) drying the solution to form a dye layer and
(e) disposing a reflection layer on the dye layer and
(f) disposing a second substrate on the reflection layer

In step (f), preferably a second substrate is bonded with the first substrate to form the high-density optical disc recording medium. Conventional techniques for bonding are printing, glueing or melting.

### EXAMPLES

All pyridinium imine based dye compounds were prepared using standard procedures known in the art, using reactions as described above, involving the appropriate aminopyridine derivative in presence of trialkylorthoformiate and the proper barbituric acid derivative in acidic medium as solvent. The pyridine imine compounds are then alkylated using alkylating agents, in a non-reactive solvent, i.e. dichloromethane, eventually in presence of organic base, i.e. triethylamine, providing the dyes of formula (I).
In the following examples "part" is always part by weight unless indicated otherwise.

### Example 1

a) 5 parts of 2-aminopyridine, 7.9 parts of triethylorthoformiate and 6.8 parts of barbituric acid are mixed into 50 parts of acetic acid. The mixture is then stirred at reflux for 12 hours. The mixture is cooled to 25°C, filtered and washed with water until pH is neutral. The pale beige presscake is dried and the final imine is obtained with 90% yield.

b) 1.5 parts of 2-(5-methineimino-barbituric acid)-pyridine and 1.8 parts of triethyloxonium tetrafluoroborate are mixed together in 30 parts of dichloromethane and stirred at 40°C for 12 hours. After filtration at 25°C, washing with 20 parts of dichloromethane and drying, the desired pyridinim tetrafluoroborate salt is obtained in 95% yield as a yellowish-beige powder. 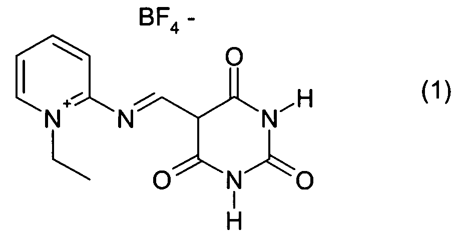
UV-Vis (MeOH) λₘₐₓ: 345 nm; ε (λₘₐₓ): 107 l.g⁻¹.cm⁻¹; Solubility (in Tetrafluoropropanol, 25°C): 20 g/l; DSC (decomp.) = 326°C; Heat release (W/g) = 4; MS (positive mode): 261 (M⁺), 262 ((M+1)⁺)

### Example 2

2.5 parts of pyridinim tetrafluoroborate salt dye as obtained in example 1, and 5.7 parts of an azo cobalt complex (as represented in the following final dye combination) are suspended into 25 parts of ethanol. The mixture is stirred for 5 hours at reflux. After cooling at 25°C, the suspension is filtered, washed with 10 parts of ethanol and 10 parts of water. After drying, the final dye is obtained with 94% yield as brownish orange powder. 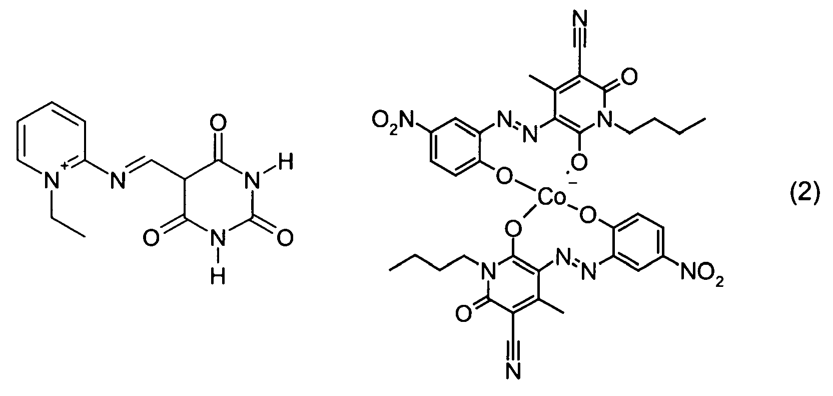
UV-Vis (MeOH) λₘₐₓ: 343 / 478 nm; ε (_{343 nm}): 65 l.g⁻¹.cm⁻¹; Solubility (in Tetrafluoropropanol, 25°C): 20 g/l; DSC (decomp.) = 323°C; Heat Relase (W/g) = 28.

### Application Example

The optical and thermal properties of the pyridinium imine based dye compounds were studied. The dyes show high absorption at the desired wavelengths. In addition, the shape of the absorption spectra, that still remains critical to the disc reflectivity and formation of clean mark edges, are composed of one major band, comprised in a range of from 350 to 500 nm, preferably of from 350 to 400 nm.
More precisely, n values of the refractive index were evaluated between 1.0 and 2.7 (see example 1). Light stabilities were found comparable to commercial dyes which usually are stabilised with quenchers for the use in optical data recording.
Sharp threshold of thermal decomposition within the required temperature range characterizes the new pyridinium imine based dyes which are assumed to be desirable for the application in optical layers for optical data recording.
As a conclusion, the pyridinium imine based dye compounds are within the specifications which are primarily required by the industry for the use of dyes in optical data recording, in particular in the next-generation optical data recording media in the blue laser range.

## Claims

1. A dye compound of formula (I) 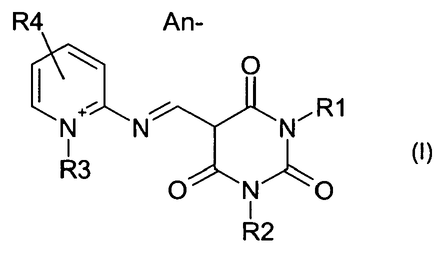
wherein
R₁ and R₂ independently of one another, represent hydrogen, C₁₋₈ alkyl wherein the alkyl rest can be unsubstituted or substituted by C₁₋₄ alkyl, hydroxy (-OH), by C₆₋₁₂ aryl or by -NR₅R₆ in which R₅ and R₆ are independently selected from hydrogen, C₁₋₈ alkyl or C₆₋₁₂ aryl; CX₃ where X can be chlorine, fluorine, bromine;
R₃ represents C₁₋₈ alkyl unsubstituted or substituted by C₁₋₄ alkyl, hydroxy (-OH) or -NR₇R₈ in which R₇ and R₈ are independently selected from hydrogen, C₁₋₈ alkyl or C₆₋₁₂ aryl;
R₄ represents hydrogen, cyano (CN), halogen, nitro (NO₂), hydroxy (OH) or C₁₋₁₂ alkyl;
An- represents an anion counter-part selected from inorganic anions such as iodine, fluorine, bromine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂;
An⁻ can also be an anionic azo metal complex based on cobalt metal.

2. A dye compound of formula (I) according to claim 1 wherein
R₁ and R₂ independently of one another, represent hydrogen, C₁₋₈ alkyl wherein the alkyl rest can be unsubstituted or substituted by C₁₋₄ alkyl, by -NR₅R₆ in which R₅ and R₆ are independently selected from hydrogen, C₁₋₈ alkyl or C₆₋₁₂ aryl;
R₃ represents C₁₋₈ alkyl;
R₄ represents hydrogen, nitro (NO₂), or C₁₋₆ alkyl;
An- represents an anion counter-part selected from inorganic anions such as iodine, perchlorate, hexafluoroantimonate, hexafluorophosphate, tetrafluoroborate, or organic anions such as dicyanoamide (N(CN)₂) or trifluoromethanesulfonimide (N(SO₂CF₃)₂;
An⁻ can also be an anionic azo metal complex based on cobalt metal.

3. A dye compound of formula (I) according to claim 1 wherein
R₁ and R₂ independently of one another, represent hydrogen, C₁₋₄ alkyl;
R₃ represents C₁₋₄ alkyl;
R₄ represents hydrogen, nitro (NO₂);
An- represents an anion counter-part selected from inorganic anions such as iodine, hexafluoroantimonate, tetrafluoroborate, or organic anions such as dicyanoamide (N(CN)₂) or trifluoromethanesulfonimide (N(SO₂CF₃)₂;
An⁻ can also be an anionic azo metal complex based on cobalt metal.

4. A dye compound of formula (I) according to claim 1 wherein
R₁ and R₂ represent hydrogen;
R₃ represents methyl;
R₄ represents hydrogen;
An⁻ represents an anionic azo cobalt complex of the following formula

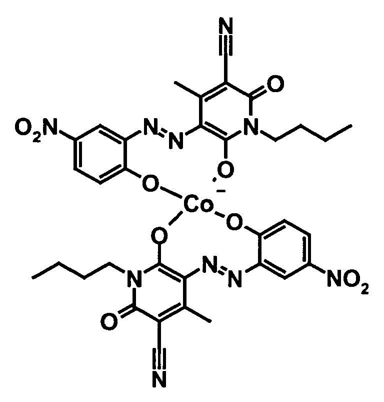

5. An optical layer comprising at least one dye compound according to formula (I) as defined in claims 1 to 4.

6. A method for producing an optical layer according to claim 5, comprising the following steps
(a) providing a substrate
(b) dissolving a dye compound or a mixture comprising at least one dye compound of formula (I), as defined in claims 1 to 4 in an organic solvent to form a solution,
(c) coating the solution (b) on the substrate (a);
(d) evaporating the solvent to form a dye layer.

7. A method according to claim 6, wherein the substrate is polycarbonate (PC) or polymethylmethacrylate (PMMA).

8. A method according to claim 6, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

9. A method according to claim 6, wherein the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and
the amides are selected from dimethylformamide or dimethylacetamide.

10. An optical recording medium comprising an optical layer according to claim 5.
